# EUROPÄISCHE PATENTANMELDUNG

(11) **EP 0 631 928 A1**
(43) Veröffentlichungstag der Anmeldung: **04.01.1995**
(21) Anmeldenummer: 93117065.8
(22) Anmeldetag: 21.10.1993
(51) Int. Cl.: B62J 6/06

(54) **Schaltgelenk, insbesondere für eine Zweiradlichtmaschine**

(30) Priorität: 01.07.1993 DE 9309808 U
(71) Anmelder: UNION Sils, van de Loo & Co. GmbH, D-58730 Fröndenberg (DE)
(72) Erfinder: Konzorr, Hubert, D-58730 Fröndenberg (DE)
(74) Vertreter: Cohausz, Helge B., Dipl.-Ing.

(57) **Zusammenfassung**

Die vorliegende Erfindung betrifft ein Schaltgelenk für eine auf einer Gelenkachse sitzende, zwei Schwenkstellungen einnehmbare Vorrichtung, insbesondere für eine Zweiradlichtmaschine, wobei ein an der Gelenkachse (7) vorstehendes Teil (15) in einer ersten Schwenkstellung an einem an der Vorrichtung angeordneten Anschlag (14) anliegt und außerhalb des Anschlags durch eine Bewegung der Vorrichtung in axiale Richtung gelangt, wobei der Anschlag (14) von einer Stufe oder Ausnehmung eines Lagerteils (10) gebildet wird, das innerhalb des Vorrichtungsgehäuses (6) befestigt ist und in dem die Gelenkachse (7) gelagert ist.

## Beschreibung

Die Erfindung betrifft ein Schaltgelenk für eine auf einer Gelenkachse sitzende, zwei Schwenkstellungen einnehmbare Vorrichtung, insbesondere für eine Zweiradlichtmaschine, wobei ein an der Gelenkachse vorstehendes Teil in einer ersten Schwenkstellung an einem an der Vorrichtung angeordneten Anschlag anliegt und außerhalb des Anschlags durch eine Bewegung der Vorrichtung in axiale Richtung gelangt.

Es sind die verschiedensten Konstruktionen für Schaltgelenke von Zweiradlichtmaschinen bekannt. Hierbei ist die jeweilige Konstruktion aufwendig in Herstellung und Montage, mit unübersichtlichen Bedienelementen und kann aufgrund scharfkantiger Teile zu Verletzungen führen.

Der Anschlag wird von der Innenwand des Lichtmaschinengehäuses gebildet, so daß das Gehäuse aus Metall sein muß, um die Funktionstüchtigkeit nicht durch Verschleiß zu gefährden.

Aufgabe der Erfindung ist es, ein Schaltgelenk der eingangs genannten Art so zu verbessern, daß bei einfacher Herstellung und Montage eine hohe Funktionstüchtigkeit erreicht wird.

Diese Aufgabe wird erfindungsgemäß dadurch gelöst, daß der Anschlag von einer Stufe oder Ausnehmung eines Lagerteils gebildet wird, das innerhalb des Vorrichtungsgehäuses befestigt ist und in dem die Gelenkachse gelagert ist.

Bei einer solchen Konstruktion ist an der Funktion des Schaltgelenks das Gehäuse der Vorrichtung, insbesondere der Zweiradlichtmaschine nicht beteiligt, so daß die Vorrichtung einfacher in der Herstellung und Montage ist und darüber hinaus eine hohe Funktionstüchtigkeit besitzt. Die einem Verschleiß ausgesetzten Teile können aus Metall hergestellt sein, während das Vorrichtungsgehäuse zumindest im Bereich des Schaltgelenks aus Kunststoff sein kann und damit Gewicht eingespart wird und ein besonders schönes Design erreichbar ist.

Eine besonders einfache und sichere Konstruktion wird dann geschaffen, wenn das Lagerteil ein U-förmig gebogener Bügel ist, dessen zwei Schenkel je eine Öffnung, insbesondere Bohrung für die Gelenkachse aufweisen. Hierbei kann ein Schenkel des Bügels mindestens eine Stufe oder Ausnehmung als Anschlag aufweisen, an der das achsparallel vorstehende Teil, insbesondere ein Vorsprung der Gelenkachse anliegt.

Auch wird hierzu vorgeschlagen, daß die Gelenkachse auf zwei einander diametral gegenüberliegenden Seiten je einen Vorsprung aufweist, die jeweils an einer Stufe oder in einer Ausnehmung des Bügelschenkels zur Anlage gelangen.

Von Vorteil ist auch, wenn innerhalb des Bügels eine Drehfeder, insbesondere eine Schraubendruckfeder auf der Gelenkachse gelagert ist, die den Bügel gegenüber der Gelenkachse, entgegen der Bewegung der Vorrichtung in axialer Richtung und in Drehrichtung belastet. Eine einfache Konstruktion wird erreicht, wenn an der Gelenkachse ein äußerer Haltearm befestigt, insbesondere einstückig angeformt ist.

Vorzugsweise wird vorgeschlagen, daß an der Gelenkachse oder einem an der Gelenkachse befestigten Haltearm eine Taste angelenkt ist, durch die die Vorrichtung bzw. das Lagerteil axial gegenüber der Achse verschiebbar ist. Eine geringe Verletzungsgefahr bei schönem Design wird erreicht, wenn die Taste aus Kunststoff ist. Besonders vorteilhaft ist es, wenn zumindest im Bereich der Gelenkachse das Gehäuse der Vorrichtung aus Kunststoff ist.

Ein Ausführungsbeispiel der Erfindung ist in der Zeichnung dargestellt und wird im folgenden näher beschrieben. Es zeigen:

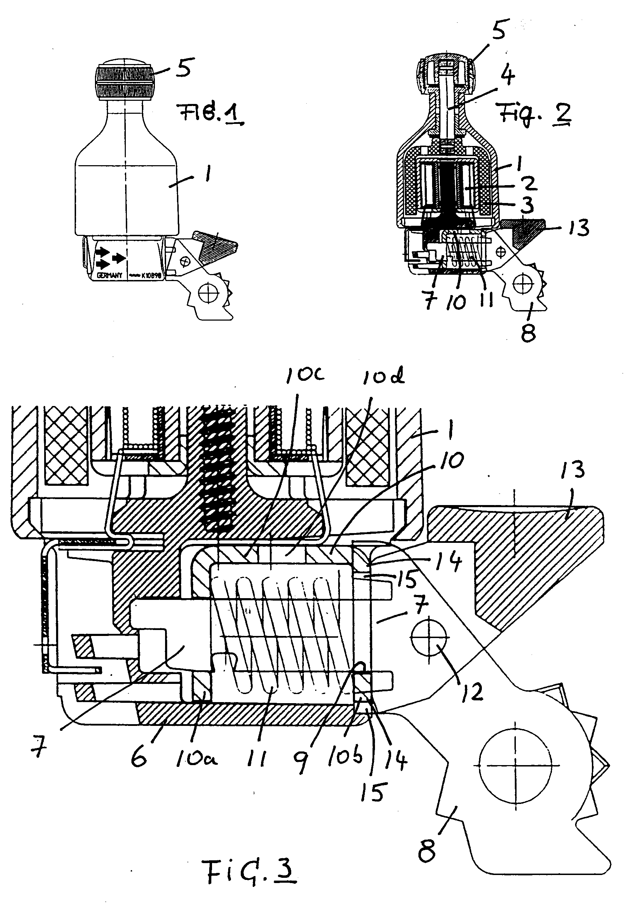

- Figur 1:: Eine Seitenansicht einer Zweiradlichtmaschine.
- Figur 2:: Einen achsialen Schnitt durch die Zweiradlichtmaschine und
- Figur 3:: den unteren Bereich der Figur 2 in vergrößertem Maßstab.

Die Zweiradlichtmaschine weist ein Gehäuse 1 auf, das im oberen Bereich im Inneren den Stator 2 und den Rotor 3 besitzt, wobei die senkrechte Welle 4 des Rotors oben in einem Rad 5 endet, das an die Seitenwand eines Fahrradreifens anlegbar ist.

Im unteren Bereich 6 des Gehäuses ist eine etwa waagerechte Gelenkachse 7 gelagert, um die das Gehäuse 1 und damit die gesamte Lichtmaschine verschwenkbar ist, von einer ersten arretierten, vom Fahrradreifen abgehobenen Stellung in eine zweite Stellung, an der das Rad 5 am Fahrradreifen anliegt. Diese zwei Stellungen der Lichtmaschine werden durch ein Schaltgelenk erzeugt, das im folgenden näher beschrieben wird:

Die Gelenkachse 7 ist einstückig mit einem Haltearm 8 ausgeführt, insbesondere aus einem Blech ausgestanzt, wobei die Gelenkachse 7 einen rechteckigen Querschnitt besitzt und in zwei Öffnungen, insbesondere Bohrungen 9 einliegt, die jeweils in den Schenkel 10a, 10b eines U-förmigen Gelenkbügels 10 eingebracht sind.

Der Gelenkbügel 10 ist im Gehäusebereich 6 gegenüber diesem Bereich unbeweglich gelagert, bzw. an dem Bereich befestigt, wobei der mittlere Bereich 10c des Gelenkbügels 10 zwischen den Schenkeln eine Öffnung, insbesondere Bohrung 10d aufweist, die zur Befestigung oder Lagesicherung des Gelenkbügels 10 dienen kann.

Auf die Gelenkachse 7 im Bereich zwischen den beiden Schenkeln 10a, 10b ist eine schraubenförmige Drehdruckfeder 11 gelagert, die den Bügel 10 gegenüber der Gelenkachse entgegen der achsial gerichteten Bewegung der Lichtmaschine belastet und darüber hinaus die Lichtmaschine mit ihrem oberen Rad 5 in Anlage am Zweiradreifen hält, wenn die Lichtmaschine sich nicht mehr in der arretierten Stellung des Schaltgelenks befindet. Am Haltearm 8 bzw. an der Gelenkachse 7 ist durch einen Stift 12 eine Taste 13 angelenkt, die bei ihrer Betätigung nach unten die Gelenkachse 7 nach rechts aus dem Gelenkbügel 10 herauszieht, um das Schaltgelenk von der arretierten Stellung in die nicht arretierte Stellung zu bringen. Hierbei weist der Schenkel 10b seitlich der Gelenkachse 7 auf diametral zur Achse gegenüberliegenden Seiten je eine Ausnehmung 14 auf, die als radiale Schlitze ausgeführt sind und in denen jeweils ein Teil 15 einliegt, das achsparallel am Haltearm 8 bzw., an der Gelenkachse 7 vorsteht. Die Ausnehmungen bzw. Schlitze 14 weisen eine Breite auf, die nur wenig größer ist als die Breite bzw. Dicke des Bleches, aus dem der Haltearm 8 und die Gelenkachse 7 geformt bzw. ausgestanzt sind.

Durch Druck auf die Taste 13 wird die Gelenkachse 7 relativ zum Gehäuse 1, 6 der Lichtmaschine bewegt, wobei der Zustand, in dem die Lichtmaschine an einem Zweirad befestigt ist, der Haltearm 8 bzw. die Gelenkachse 7 stillstehen und das Gehäuse, bzw. die Lichtmaschine in achsialer Richtung vom Haltearm 8 wegbewegt wird, um die Teile 15 außer Anlage der Ausnehmungen 14 zu führen. Damit wird die Lichtmaschine zum Verschwenken freigegeben, wobei der Anschwenkwinkel durch Anschläge in der Bodenplatte des Gehäuses und/oder am mittleren Bereich des Gelenkbügels 10 begrenzt wird. Zur Herstellung der arretierten Ruhelage wird der Lichtmaschinenkörper von Hand vom Reifen abgehoben, wobei dann widerrum durch eine Verschiebung der Lichtmaschine gegenüber der Gelenkachse die arretierte Ruhelage erreicht wird.

## Patentansprüche

1. Schaltgelenk für eine auf einer Gelenkachse (7) sitzende, zwei Schwenkstellungen einnehmbare Vorrichtung, insbesondere für eine Zweiradlichtmaschine, wobei ein an der Gelenkachse (7) vorstehendes Teil (15) in einer ersten Schwenkstellung an einem an der Vorrichtung angeordneten Anschlag (14) anliegt und außerhalb des Anschlags durch eine Bewegung der Vorrichtung in axiale Richtung gelangt, **dadurch gekennzeichnet,** daß der Anschlag von einer Stufe oder Ausnehmung (14) eines Lagerteils (10) gebildet wird, das innerhalb des Vorrichtungsgehäuses (6) befestigt ist und in dem die Gelenkachse (7) gelagert ist.

2. Schaltgelenk nach Anspruch 1, **dadurch gekennzeichnet,** daß das Lagerteil ein U-förmig gebogener Bügel (10) ist, dessen zwei Schenkel (10a, 10b) je eine Öffnung, insbesondere Bohrung (9) für die Gelenkachse (7) aufweisen.

3. Schaltgelenk nach Anspruch 2, **dadurch gekennzeichnet,** daß ein Schenkel (10b) des Bügels (10) mindestens eine Stufe oder Ausnehmung (14) als Anschlag aufweist, an der das achsparallel vorstehende Teil (15), insbesondere ein Vorsprung der Gelenkachse (7) anliegt.

4. Schaltgelenk nach Anspruch 2 oder 3, **dadurch gekennzeichnet,** daß die Gelenkachse (7) auf zwei einander diametral gegenüberliegenden Seiten je einen Vorsprung (15) aufweist, die jeweils an einer Stufe oder in einer Ausnehmung (14) des Bügelschenkels (10b) zur Anlage gelangen.

5. Schaltgelenk nach einem der vorherigen Ansprüche, **dadurch gekennzeichnet,** daß innerhalb des Bügels (10) eine Drehfeder (11), insbesondere eine Schraubendruckfeder auf der Gelenkachse (7) gelagert ist, die den Bügel (10) gegenüber der Gelenkachse (7) entgegen der Bewegung der Vorrichtung in axialer Richtung und in Drehrichtung belastet.

6. Schaltgelenk nach einem der vorherigen Ansprüche, **dadurch gekennzeichnet,** daß an der Gelenkachse (7) ein äußerer Haltearm (8) befestigt, insbesondere einstückig angeformt ist.

7. Schaltgelenk nach einem der vorherigen Ansprüche, **dadurch gekennzeichnet,** daß an der Gelenkachse (7) oder einem an der Gelenkachse befestigten Haltearm (8) eine Taste (13) angelenkt ist, durch die die Vorrichtung bzw. das Lagerteil axial gegenüber der Achse (7) verschiebbar ist.

8. Schaltgelenk nach Anspruch 7, **dadurch gekennzeichnet,** daß die Taste (13) aus Kunststoff ist.

9. Schaltgelenk nach einem der vorherigen Ansprüche, **dadurch gekennzeichnet,** daß zumindest im Bereich der Gelenkachse (7) das Gehäuse (6) der Vorrichtung aus Kunststoff ist.

10. Schaltgelenk nach einem der vorherigen Ansprüche, **dadurch gekennzeichnet,** daß die Gelenkachse (7) einen rechteckförmigen Querschnitt aufweist.
